# EUROPÄISCHE PATENTANMELDUNG

(11) **EP 2 905 671 A2**
(43) Veröffentlichungstag der Anmeldung: **12.08.2015**
(21) Anmeldenummer: 14199129.9
(22) Anmeldetag: 19.12.2014
(51) Int. Cl.: G05D 23/19, F24D 19/10, F24F 11/00

(54) **Verfahren zum Synchronisieren einer Thermoanlage mit einem Thermosystem**

(30) Priorität: 07.02.2014 DE 102014202311
(71) Anmelder: Robert Bosch GmbH, 70442 Stuttgart (DE)
(72) Erfinder: Ganguly, Surabhi Parthasarathy, 411021 Pune (IN); Frim, Swetlana, 35398 Giessen (DE); Block, Markus, 73728 Esslingen (DE); Fleischle, Samuel, 70734 Fellbach (DE); Langbein, Johannes, 70188 Stuttgart (DE); Kaltner, Florian, 73614 Schorndorf (DE); Janczik, Markus, 35625 Huettenberg-Rechtenbach (DE); Hirth, Heribert, 70176 Stuttgart (DE); Nicolai, Jurjen, 61440 Oberursel (Taunus) (DE)

(57) **Zusammenfassung**

Die Erfindung betrifft einen Regler und ein Verfahren zum Synchronisieren mindestens einer zweiten Solltemperatur mindestes einer Thermoanlage in Abhängigkeit von mindestens einer ersten Solltemperatur mindestens eines Thermosystems, wobei abhängig von einer gemessenen Temperatur einer Umgebung des Thermosystems und abhängig von der ersten Solltemperatur eine Heiz- oder Kühlleistung der des Thermosystems in der Weise geändert wird, dass sich die Temperatur in der Umgebung des Thermosystems in Richtung der ersten Solltemperatur ändert, wobei abhängig von der zweiten Solltemperatur die Thermoanlage gesteuert wird, um eine Heiz- und/oder Kühlleistung für das Thermosystem bereitzustellen, und wobei abhängig von der ersten und der zweiten Solltemperatur und abhängig von einer Strategie eine Zieltemperatur ermittelt wird, und wobei die Zieltemperatur als neue zweite Solltemperatur für die Thermoanlage verwendet wird.

## Beschreibung

Die Erfindung betrifft ein Verfahren zum Synchronisieren einer Solltemperatur einer Thermoanlage mit einer Solltemperatur eines Thermosystems gemäß Patentanspruch 1 und einen Regler gemäß Patentanspruch 16.

### Stand der Technik

Aus dem Stand der Technik ist es bekannt, eine zentrale Steuereinheit vorzusehen, mit der ein Regler einer Wärme-/Kältequelle eines Thermosystems gesteuert werden kann. Der Regler ist vorgesehen, um abhängig von einer vorgegebenen Solltemperatur eine Wärmeleistung oder Kälteleistung der Wärme-/Kältequelle einzustellen. Zudem ist eine Thermoanlage vorgesehen, die eine Heiz- und/oder Kühlleistung für das Thermosystem bereitstellt.

### Offenbarung der Erfindung

Die Aufgabe der Erfindung besteht darin, ein verbessertes Verfahren zum Betreiben eines Thermosystems und einer Thermoanlage bereitzustellen.

Die Aufgabe der Erfindung wird durch das Verfahren gemäß Patentanspruch 1 und den Regler gemäß Patentanspruch 16 gelöst. Weitere vorteilhafte Ausführungsformen des Verfahrens sind in den abhängigen Ansprüchen angegeben.

Ein Vorteil des beschriebenen Verfahrens besteht darin, dass eine Solltemperatur der Thermoanlage mit der Solltemperatur des Thermosystems abgestimmt wird. Dies wird dadurch erreicht, dass abhängig von einer ersten Solltemperatur des Thermosystems und abhängig von einer zweiten Solltemperatur der Thermoanlage und abhängig von einer Strategie eine Zieltemperatur ermittelt wird, und wobei die Zieltemperatur von der Thermoanlage als neue Solltemperatur verwendet wird. Dadurch kann die Thermoanlage effizient die Wärme- oder Kühlleistung zur Verfügung stellen, die das Thermosystem benötigt.

In einer Ausführungsform weist die Thermoanlage mindestes einen dritten Regler auf, wobei der dritte Regler vorgesehen ist, um abhängig von der zweiten Solltemperatur die Thermoanlage zu steuern, um eine Heiz- und/oder Kühlleistung für das Thermosystem bereitzustellen, und wobei die neue zweite Solltemperatur von dem dritten Regler zur Steuerung der Heiz- und/oder Kühlleistung der Thermoanlage verwendet wird. Das Thermosystem weist mindestens einen Regler und eine Wärme-/Kältequelle auf, wobei der Regler vorgesehen ist, um abhängig von der gemessenen Temperatur und der ersten Solltemperatur eine Heiz- oder Kühlleistung der Wärme-/Kältequelle in der Weise zu ändern, dass sich die Temperatur in Richtung der ersten Solltemperatur ändert.
Dadurch wird eine einfache Umsetzung des Verfahrens ermöglicht.

In einer Ausführungsform wird die Zieltemperatur zu festgelegten Zeiten ermittelt, wobei die Zeiten von dem Regler des Thermosystem und/oder von dem Regler der Thermoanlage vorgegeben werden. Beispielsweise sind die festgelegten Zeiten Schaltzeiten, zu denen die Regler die Solltemperatur ändern. Auf diese Weise wird eine verbesserte Synchronisation erreicht.

In einer Ausführung wird die Zieltemperatur ermittelt und als neue zweite Solltemperatur von dem dritten Regler verwendet wird, wenn wenigstens einer der Regler seine Solltemperatur ändert.

In einer weiteren Ausführungsform besteht die Strategie darin, die höchste der ersten oder der zweiten Solltemperatur als Zieltemperatur zu verwenden. Somit wird sichergestellt, dass ein maximaler Komfort für einen Nutzer der Anlage bereitgestellt wird.

In einer weiteren Ausführungsform besteht die Strategie darin, die niedrigste der ersten oder der zweiten Solltemperatur als Zieltemperatur zu verwenden. Auf diese Weise wird ein energiesparendes Betreiben der Thermoanlage ermöglicht. Somit wird wenig Energie zum Betreiben der Anlage benötigt.

In einer weiteren Ausführungsform besteht die Strategie darin, abhängig von der ersten und der zweiten Solltemperatur eine Zieltemperatur zu berechnen. Dies kann beispielsweise der Mittelwert zwischen der ersten und der zweiten Solltemperatur sein. Somit kann eine weitere Strategie zum Betreiben des Thermosystems und der Thermoanlage bereitgestellt werden. Insbesondere können die Strategien beispielsweise durch eine Eingabe von einem Nutzer der Anlage ausgewählt, angepasst, festgelegt oder verändert werden.

In einer weiteren Ausführungsform kann das Thermosystem in einem Automodus oder in einem manuellen Modus betrieben werden. Im manuellen Modus wird keine Synchronisation durchgeführt. Die Synchronisation wird nur im Automodus durchgeführt.

In einer weiteren Ausführungsform kann die Thermoanlage in einem Automodus oder in einem manuellen Modus betrieben werden. Die Thermoanlage wird nur im Automodus und nicht im manuellen Modus synchronisiert. Auf diese Weise ist es möglich, die Synchronisation abhängig von einem Betriebszustand des Thermosystems oder der Thermoanlage zu begrenzen. Auf diese Weise wird eine erhöhte Flexibilität beim Betreiben des Thermosystems und/oder der Thermoanlage erreicht.

In einer weiteren Ausführungsform verwenden die Regler des Thermosystems und/oder der dritte Regler der Thermoanlage festgelegte Schaltzeiten, um den Betriebszustand, insbesondere die Solltemperatur zu ändern. Dazu sind entsprechende Steuerprogramme abgelegt. Die Schaltzeiten können verwendet werden, um bei den Schaltzeiten eine Synchronisation der Solltemperaturen zwischen dem Thermosystem und der Thermoanlage durchzuführen. Damit wird eine verbesserte Synchronisation ermöglicht.

In einer weiteren Ausführungsform wird in festgelegten Zeitabständen eine interne Zeit der Regler der Thermoanlage und des Thermosystem synchronisiert. Dadurch wird eine präzise Synchronisation ermöglicht.

In einer weiteren Ausführungsform kann die Solltemperatur des Thermosystems von einem Nutzer verändert werden. Die Änderung wird nicht sofort für eine Synchronisation verwendet, sondern erst ab einem folgenden Schaltzeitpunkt der Thermoanlage oder des Thermosystems. Auf diese Weise kann erreicht werden, dass unabhängig von der Synchronisation für einen vorgegebenen Zeitraum eine individuelle Steuerung des Thermosystems unabhängig von der Synchronisation möglich ist. Dadurch wird die Flexibilität zum Betreiben des Thermosystems weiter erhöht.

In einer weiteren Ausführungsform weist das Thermosystem mehrere Regler und Wärme-/Kältequellen auf, wobei jeder Regler eine eigene Solltemperatur verwendet. Aus den Solltemperaturen der Regler wird eine gemeinsame erste Solltemperatur ermittelt. Aus der gemeinsamen ersten Solltemperatur und der zweiten Solltemperatur wird eine Zieltemperatur ermittelt. Auf diese Weise wird ein gestuftes Verfahren zum Berücksichtigen mehrerer Regler mit Wärme-/Kältequellen ermöglicht.

Abhängig von der gewählten Ausführung wird die Zieltemperatur abhängig von der gemeinsamen ersten Solltemperatur und der zweiten Solltemperatur in einem Regler des Thermosystems oder in einem zentralen Regler oder in dem dritten Regler der Thermoanlage ermittelt wird. Dadurch wird eine effiziente Anpassung der Leistung der Thermoanlage erreicht.

In einer Ausführung wird zuerst eine Mittelung der Solltemperatur der Regler des Thermosystems durchgeführt. Die gemittelte Solltemperatur wird an den dritten Regler der Thermoanlage übermittelt. Somit kann ein einfaches Verfahren zum Synchronisieren des dritten Reglers der Thermoanlage bereitgestellt werden.

Abhängig von der gewählten Ausführung wird die gemeinsame ersten Solltemperatur in einem Regler des Thermosystems oder in einem zentralen Regler oder in dem dritten Regler der Thermoanlage ermittelt wird.

Die Wärme-/Kältequelle kann als Wärmetauscher oder als Auslass einer Klimaanlage oder als Auslass einer Lüftungsanlage ausgebildet sein.

Die Thermoanlage kann als Heizanlage oder als Heiz- und Kühlanlage oder als Klimaanlage oder als Lüftungsanlage ausgebildet sein.

Die Erfindung wird im Folgenden anhand der Figuren näher erläutert. Es zeigen
Figur 1 einen schematischen Aufbau eines Thermosystems und einer Thermoanlage,
Figur 2 eine schematische Darstellung der funktionellen Betriebsweise einer ersten Ausführungsform,
Figur 3 eine schematische Darstellung einer Betriebsweise einer weiteren Ausführungsform,
Figur 4 eine schematische Darstellung eines Verfahrens zum Betreiben des Thermosystems und der Thermoanlage, und
Figur 5 einen weiteren schematischen Programmablauf zur Durchführung einer Synchronisation.

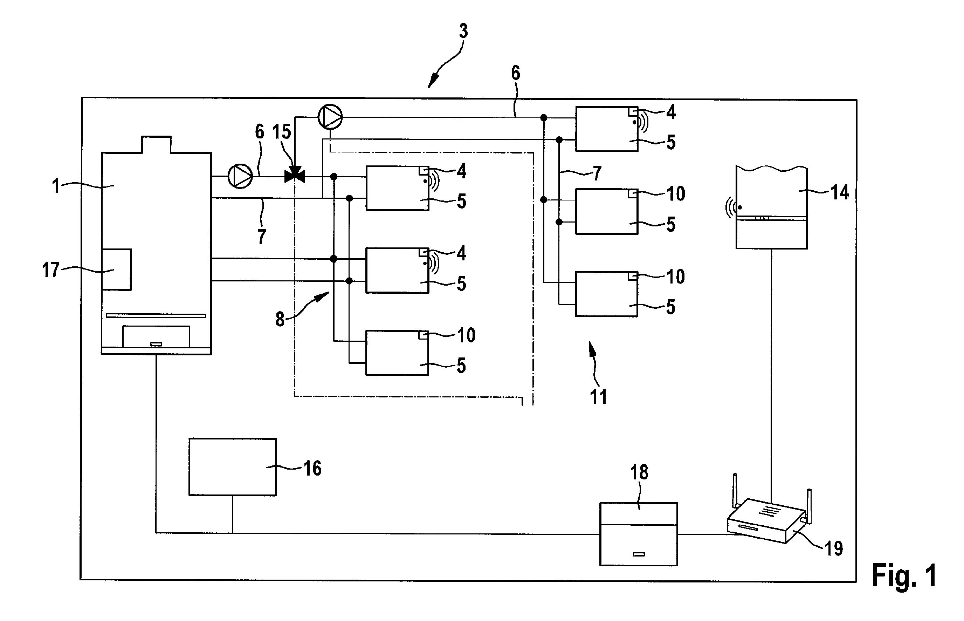

Figur 1 zeigt in einer schematischen Darstellung ein Thermosystem 3 und eine Thermoanlage 1. Die Thermoanlage 1 ist ausgebildet, um Wärme- und/oder Kälteleistung für das Thermosystem 3 zur Verfügung zu stellen. Dazu ist die Thermoanlage 1 über entsprechende Leitungen 6, 7 mit einem Wärmetauscher 5 des Thermosystems 3 verbunden. Eine erste Leitung 6 kann einen Zulauf für ein Fluid und eine zweite Leitung 7 einen Ablauf für das Fluid vom Wärmetauscher 5 darstellen. Der Wärmetauscher 5 weist einen Regler 4 auf, der abhängig von einer Solltemperatur der Umgebung die Kühl- und/oder Heizleistung des Wärmetauschers 5, d.h. den Durchfluss von Fluid regelt. Der Wärmetauscher 5 stellt eine Wärme-/Kältequelle dar. Die Thermoanlage 1 kann als Heiz-und/oder Kühlanlage ausgebildet sein, die ein warmes oder kaltes Fluid für die Bereitstellung einer Wärme- oder Kühlleistung dem Wärmetauscher 5 zuführt.

Abhängig von der gewählten Ausführung kann die Thermoanlage auch als Klimaanlage ausgebildet sein. In diesem Beispiel ist als Wärme-/Kältequelle anstatt des Wärmetauschers eine Auslassöffnung, über die abhängig von der Regelung des Reglers 4 wärmere oder kältere Luft abgegeben wird. Zudem kann auch das Luftvolumen abhängig vom Regler 4 geregelt werden.

Zudem kann die Thermoanlage als Luftheizung und/oder als Luftkühlung ausgebildet sein. In diesem Fall ist die Wärme-/Kältequelle in Form eines Auslasses ausgebildet, über den abhängig von der Stellung des Reglers mehr oder weniger Luftvolumen abgegeben wird.

In dem dargestellten Ausführungsbeispiel weist die Thermoanlage 1 einen ersten Kreis 8 auf, in dem drei Wärmetauscher 5 parallel angeordnet sind. Jeder Wärmetauscher 5 ist mit einer ersten und einer zweiten Leitung 6, 7 verbunden. Zudem beweisen zwei Wärmetauscher 5 einen Regler 4 auf. Ein dritter Wärmetauscher 9 weist keinen Regler 4, sondern einen Stellregler 10 auf. Zudem weist das Thermosystem 3 einen zweiten Kreis 11 auf, der parallel zum ersten Kreis 8 angeordnet ist und drei Wärmetauscher 5 aufweist. In dem zweiten Kreis 8 weist nur ein Wärmetauscher 5 einen Regler 4 auf. Die zwei weiteren Wärmetauscher 12, 13 weisen jeweils einen Stellregler 10 auf, der nicht zeitlich steuerbar ist. Der zweite Kreis 11 ist über ein Schaltventil 15 an die erste Leitung 6 angeschlossen.

Es kann ein weiterer Regler 14 vorgesehen sein, der z.B. in dem gleichen Gebäude wie das Thermosystem 3 oder entfernt in einem anderen Gebäude angeordnet sein. Der weitere Regler 14 ist ausgebildet, um die Funktionsweise der Regler 4, insbesondere um die Solltemperatur der Regler 4 einzustellen. Zudem kann der weitere Regler 14 ausgebildet sein, um einen Zeitablauf mit Schaltzeiten zwischen verschiedenen Sollwerten für die Regler 4 vorzugeben.

Die Thermoanlage 1 steht mit einem dritten Regler 16 in Verbindung. Der dritte Regler 16 ist ausgebildet, um abhängig von einer zweiten Solltemperatur die Betriebsweise der Thermoanlage 1 zu steuern. Dazu sind entsprechende Steuerprogramm abgelegt, die eine in Bezug auf Abgase, Verbrauch und/oder Komfort in Abhängigkeit von der zweiten Solltemperatur bestimmte Leistungsprofile für eine Heiz- und/oder Kühlleistung für die Thermoanlage 1 vorgeben. Die Thermoanlage 1 kann in Form einer Heizanlage, einer Kühlanlage, einer Kühl- und Heizanlage, einer Luftheizung oder in Form einer Klimaanlage, insbesondere einer Luftklimaanlage ausgebildet sein.

Die Regler 4, der weitere Regler 14 und der dritte Regler 16 sind ausgebildet, um Daten drahtlos oder drahtgebunden miteinander auszutauschen. Die Daten können beispielsweise über eine Funkverbindung, insbesondere eine WLAN-Verbindung ausgetauscht werden. Zudem kann auch Zigbee, Bluetooth, KNX, EI-Bus oder EMS-Bus verwendet werden. In dem dargestellten Ausführungsbeispiel ist ein EMS-Bus vorgesehen, der den dritten Regler 16 mit der Thermoanlage 1 bzw. mit einer Steuereinheit 17 der Thermoanlage 1 verbindet. Zudem steht der EMS-Bus über eine IP-Schnittstelle 18 über Ethernet mit einem Router 19 in Verbindung. Der Router 19 ist ausgebildet, um eine Datenverbindung mit dem weiteren Regler 14 herzustellen.

Abhängig von der gewählten Ausführungsform kann auf den weiteren Regler 14 und/oder die IP-Schnittstelle 18 und/oder den Router 19 verzichtet werden bzw. die Funktionen des weiteren Reglers 14 und/oder der IP-Schnittstelle 18 und/oder des Routers 19 können in anderen Geräten wie z.B. in den dritten Regler 16, den weiteren Regler 14 und/oder den Regler 4 integriert sein.

Im dritten Regler 16 kann wenigstens eine von mehreren Strategien abgelegt ist, mit der in Abhängigkeit von einer ersten Solltemperatur des Reglers 4 und einer zweiten Solltemperatur des dritten Reglers 16 eine Zieltemperatur ermittelt wird, und wobei die Zieltemperatur von dem dritten Regler 16 der Thermoanlage 1 als neue zweite Solltemperatur verwendet wird.

Abhängig von der gewählten Ausführung kann auch im Regler 4 und/oder im weiteren Regler 14 wenigstens eine von mehreren Strategien abgelegt sein, mit der in Abhängigkeit von der ersten Solltemperatur des Reglers 4 und der zweiten Solltemperatur des dritten Reglers 16 eine Zieltemperatur ermittelt wird, und wobei die Zieltemperatur für den weiteren Regler 16 der Thermoanlage 1 als neue zweite Solltemperatur vorgegeben wird.

Weiterhin kann ein Nutzer Daten, insbesondere Schaltzeiten, Solltemperaturen in die Regler 4, den weiteren Regler 14, die IP-Schnittstelle 18, den Router 19 und/oder den dritten Regler 16 einschreiben bzw. auslesen. Dazu kann ein Eingabegerät mit einem Display vorgesehen sein. Zudem können die Regler 4, der weitere Regler 14, die IP-Schnittstelle 18, der Router 19 und/oder der dritte Regler 16 Schnittstellen aufweisen, die einen Datenaustausch z.B. über ein Smartphone oder einen Tablet-PC biespielsweise über das Internet ermöglichen.

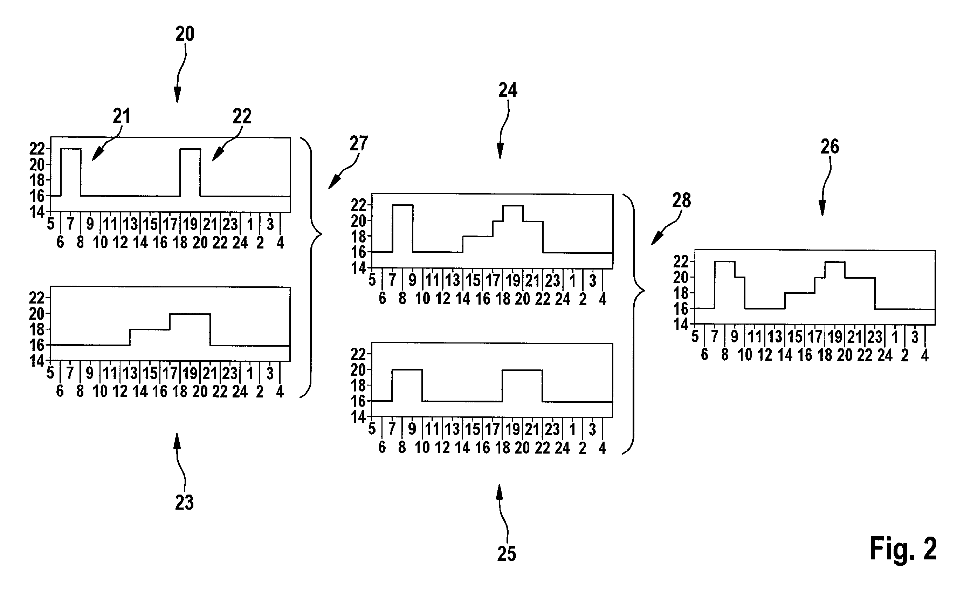

Figur 2 zeigt in einer schematischen Darstellung eine Ausführungsform einer Synchronisation für die Thermoanlage 1 und das Thermosystem 3. In dem dargestellten Ausführungsbeispiel weist das Thermosystem 3 zwei Wärmetauscher 5 auf, die jeweils über einen Regler 4 mit dem weiteren Regler 14 in Verbindung stehen. Jeder Regler 4 weist ein Steuerprogramm auf, mit dem der Regler 4 in Abhängigkeit von einer vorgegebenen Solltemperatur und der Zeit die Wärmeoder Kühlleistung des Wärmetauschers 5 einstellt.

Wie bereits oben ausgeführt kann anstelle des Wärmetauschers 5 als Wärme-/Kältequelle bei der Ausführung der Thermoanlage 1 als Klimaanlage oder Luftheizung oder Luftkühlung anstatt des Wärmetauschers eine Auslassöffnung vorgesehen sein, über die abhängig von der Regelung des Reglers 4 wärmere oder kältere Luft abgegeben wird. Zudem kann auch das Luftvolumen abhängig vom Regler 4 geregelt werden.

Für einen ersten Regler 4 und einen ersten Wärmetauscher 5 ein erstes Schaltprogramm 20 schematisch dargestellt. Das erste Schaltprogramm 20 ist in Form einer Kennlinie dargestellt, in der die Solltemperaturen auf der Y-Achse gegenüber der Zeit aufgetragen sind. Das erste Schaltprogramm 20 zeigt im Wesentlichen die Vorgabe einer konstanten Solltemperatur, wobei zu zwei Zeitabschnitten 21, 22 die Solltemperatur für eine vorgegebene Zeit erhöht wird. Nach Ablauf der Zeiträume 21, 22 regelt der erste Regler 4 die Wärme- oder Kühlleistung des Wärmetauschers 5 wieder auf die ursprüngliche Solltemperatur zurück. Der erste Regler 4 und der erste Wärmetauscher 5 können beispielsweise in einem Bad eines Gebäudes angeordnet sein.

Unter dem ersten Schaltprogramm 20 ist ein zweites Schaltprogramm 23 eines zweiten Reglers 4 eines zweiten Wärmetauschers 5 dargestellt. Der zweite Regler 4 und der zweite Wärmetauscher 5 können beispielsweise in einem Wohnzimmer eines Gebäudes angeordnet sein. Das zweite Schaltprogramm 23 weist einen anderen zeitlichen Verlauf der Solltemperatur gegenüber dem ersten Schaltprogramm 20 auf. Im zweiten Schaltprogramm 23 wird zu anderen Zeiten als im ersten Schaltprogramm 20 die Solltemperatur erhöht und anschließend wieder gesenkt.

Die zwei Regler 4 übermitteln die zwei Schaltprogramme 20,23 an den weiteren Regler 14. Der weitere Regler 14 ermittelt aus den zwei Schaltprogramme 20, 23 in einem ersten Schritt 27 gemäß einer Strategie ein drittes Schaltprogramm 24. In dem dargestellten Ausführungsbeispiel besteht die Strategie des weiteren Reglers 14 darin, von jedem der Schaltprogramme 20, 23 die maximalen Solltemperaturen zu übernehmen, wie in Figur 2 dargestellt ist. Der weitere Regler 14 übermittelt das dritte Schaltprogramm 24 an den dritten Regler 16.

In einer weiteren Ausführung übermitteln die zwei Regler 4 die zwei Schaltprogramme 20,23 an den dritten Regler 16. Der dritte Regler 16 ermittelt aus den zwei Schaltprogramme 20, 23 in einem ersten Schritt 27 gemäß einer Strategie das dritte Schaltprogramm 24. In dem dargestellten Ausführungsbeispiel besteht die Strategie darin, von jedem der Schaltprogramme 20, 23 die maximalen Solltemperaturen zu übernehmen, wie in Figur 2 dargestellt ist.

In einer weiteren Ausführung übermittelt ein Regler 4 sein Schaltprogramm 20 an den zweiten Regler 4. Der zweite Regler 4 ermittelt aus den zwei Schaltprogramme 20, 23 in einem ersten Schritt 27 gemäß einer Strategie ein drittes Schaltprogramm 24. In dem dargestellten Ausführungsbeispiel besteht die Strategie darin, von jedem der Schaltprogramme 20, 23 die maximalen Solltemperaturen zu übernehmen, wie in Figur 2 dargestellt ist. Der zweite Regler 4 übermittelt das dritte Schaltprogramm an den dritten Regler 16.

In Figur 2 ist ein viertes Schaltprogramm 25 dargestellt, das im dritten Regler 16 abgespeichert ist und zur Steuerung der Thermoanlage 1 dient. Das vierte Schaltprogramm 25 weist ein anderes Schaltverhalten bzw. einen anderen zeitlichen Verlauf der Solltemperatur auf als das dritte Schaltprogramm 24. Auch im vierten Schaltprogramm 25 ist auf der Y-Achse die Solltemperatur und auf der X-Achse der Zeitverlauf aufgetragen.

Das dritte und das vierte Schaltprogramm 24, 25 werden bei einem zweiten Schritt 28 vom dritten Regler 16 miteinander vergleichen und der dritte Regler 16 ermittelt gemäß einer Strategie daraus ein fünftes Schaltprogramm 26, das in Figur 2 dargestellt ist. In dem dargestellten Ausführungsbeispiel besteht die Strategie des dritten Reglers darin, jeweils von dem vierten und dem dritten Schaltprogramm 24, 25 die maximalen Sollwerte zu übernehmen. Somit weist das fünfte Schaltprogramm 26 einen zeitlichen Verlauf der Solltemperatur auf, der jeweils den maximalen Solltemperaturen des dritten bzw. des vierten Schaltprogramms 24, 25 entspricht. Das fünfte Schaltprogramm 26 weist neue zweite Solltemperaturen für die Steuerung der Thermoanlage 1 auf. Der dritte Regler 16 verwendet das fünfte Schaltprogramm 26 für die Steuerung der Betriebsweise der Thermoanlage 1.

Abhängig von der gewählten Ausführungsform kann der erste Schritt 27 und/oder der zweite Schritt 28 sowohl im dritten Regler 16 als auch im weiteren Regler 14 als auch im Regler 4 ausgeführt werden. Bei dieser Ausführungsform übermittelt der weitere Regler 14 oder ein Regler 4 das fünfte Schaltprogramm 26 an den dritten Regler 16.

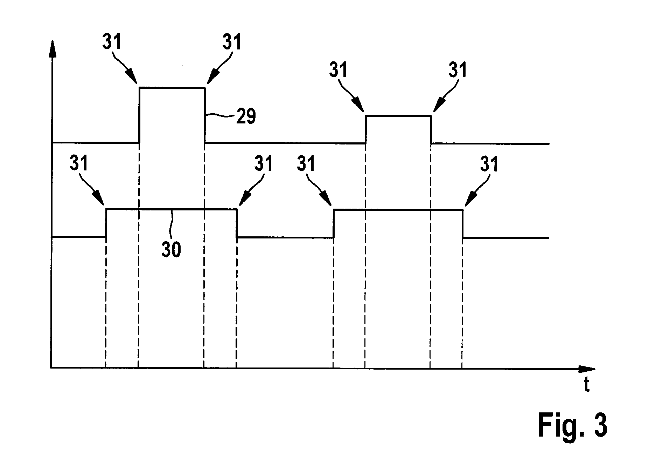

Figur 3 zeigt in einer schematischen Darstellung ein Diagramm für eine Situation vor der Synchronisation der Thermoanlage und des Thermosystems. Das Diagramm zeigt eine erste Kennlinie 29 für den zeitlichen Verlauf der Solltemperatur eines Reglers 4 oder eines weiteren Reglers 14 eines Thermosystems 3. Entlang der Y-Achse ist die Solltemperatur und entlang der X-Achse ist die Zeit aufgetragen. Unter der ersten Kennlinie 29 ist eine zweite Kennlinie 30 dargestellt, die in einer schematischen Darstellung den zeitlichen Verlauf eines Schaltprogramms der Thermoanlage 1 darstellt. Die erste und die zweite Kennlinie 29, 30 weist Schaltpunkte 31 auf, zu denen sich die Werte für die Solltemperaturen der Kennlinie 29, 30 ändern.

In einer Ausführungsform sind der Regler 4 und/oder der weitere Regler 14 in der Weise ausgebildet, dass jeweils zu einem Schaltpunkt 31 die Solltemperatur des wenigstens einen Reglers 4 an den dritten Regler 16 übermittelt werden. Nach der Übermittlung überprüft der dritte Regler 16, welche Strategie vorliegt. Es können mehrere Strategien vorliegen, wobei eine Strategie abhängig von weiteren Parametern ausgewählt werden. Beispielsweise kann ein Nutzer durch eine entsprechende Eingabe eine der Strategien auswählen. Der dritte Regler 16 ermittelt in Abhängigkeit von der Strategie bzw. der ausgewählten Strategie und in Abhängigkeit von den Solltemperaturen des dritten Reglers 16 und des Reglers 4 eine Zieltemperatur. Die Zieltemperatur wird vom dritten Regler 16 als neue zweite Solltemperatur verwendet, bis ein neuer Schaltpunkt des dritten Reglers 16 oder des Reglers 4 kommt.

Die Ermittlung der Zieltemperatur kann auch von einem Regler 4 oder dem weiteren Regler 14 durchgeführt werden. Dazu müssen dem Regler 4 bzw. dem weiteren Regler 14 die Solltemperaturen der Regler 4 und die zweite Solltemperatur des dritten Reglers 16 übermittelt werden. Zudem verfügt der Regler 4 oder der weitere Regler 14 über eine Strategie zur Berechnung der Zieltemperatur. Der Regler 4 bzw. der weitere Regler 14 übermittelt die Zieltemperatur an den dritten Regler 16. Der dritte Regler 16 verwendet die empfangene Zieltemperatur als neue zweite Solltemperatur.

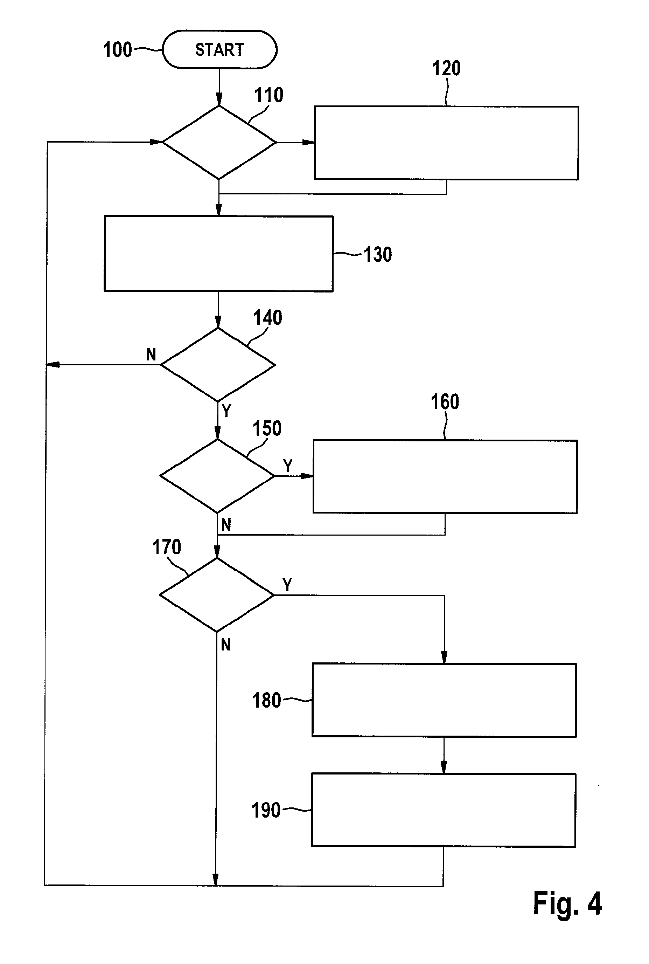

Figur 4 zeigt in einer schematischen Darstellung einen Programmablauf für eine Ausführungsform des Verfahrens. Bei Programmpunkt 100 wird das Verfahren gestartet. Bei Programmpunkt 110 erfolgt die Abfrage, ob mehr als 24 Stunden vergangen sind, seit die letzte Synchronisation stattgefunden hat. Ist dies der Fall, so wird bei Programmpunkt 120 ein zeitlicher Abgleich zwischen der Thermoanlage 1 und dem Thermosystem 3, das heißt zwischen dem weiteren Regler 14 und/oder dem Regler 4 und dem dritten Regler 16 ausgeführt. Dabei wird die Tageszeit und das Datum ausgetauscht und auf einen Wert beispielsweise des dritten Reglers 16 festgelegt. Anschließend wird zu einem Programmpunkt 130 zurückverzweigt.

Ergibt die Abfrage bei Programmpunkt 110, dass weniger als 24 Stunden seit der letzten Zeitsynchronisation vergangen sind, so wird Programmpunkt 130 verzweigt. Bei Programmpunkt 130 wird überprüft, in welchem Modus sich die Kreise 8, 11 befinden. Bei einem folgenden Programmpunkt 140 wird vom dritten Regler 16 oder vom Regler 4 oder vom weiteren Regler 14 überprüft, ob sich die Kreise bzw. wenigstens einer der Kreise 8, 11 sich in einem Automodus befinden. Diese Information kann im Regler 4 oder im weiteren Regler 14 abgelegt sein. Ist dies nicht der Fall, so wird zu Programmpunkt 110 zurückverzweigt. Befindet sich wenigstens einer der Kreise 8,11 in einem Automodus, so wird zu Programmpunkt 150 verzweigt. Bei Programmpunkt 150 wird überprüft, ob mehr als 10 Minuten seit der letzten Synchronisation der Solltemperatur vergangen sind. Ist dies der Fall, so wird zu Programmpunkt 160 verzweigt.

Bei Programmpunkt 160 wird überprüft, welche Strategie vorgegeben ist. Die Strategie kann beispielsweise durch den weiteren Regler 14 bzw. eine Eingabe eines Nutzers oder durch den dritten Regler 16 oder durch einen Regler 4 vorgegeben werden. Als Strategie kann beispielsweise ein maximaler Komfort, ein sparsamer Betrieb oder eine bestimmte Strategie beispielsweise eine Mittelwertbildung der Sollwerte vorgegeben sein. Bei der Strategie eines maximalen Komforts wird jeweils die höchste Solltemperatur der Regler 4 verwendet und als neue zweite Solltemperatur für den dritten Regler 16 vorgegeben. Bei der Strategie des sparsamen Betriebes wird jeweils die niedrigste Solltemperatur der Regler 4 verwendet und als neue zweite Solltemperatur für den dritten Regler 16 verwendet. Zudem können auch andere Strategien verwendet werden, um aus den Solltemperaturen der Regler 4 des Thermosystems eine neue zweite Solltemperatur für den dritten Regler 16 zu berechnen.

Anschließend wird zu Programmpunkt 170 verzweigt. Ergibt die Abfrage bei Programmpunkt 150, dass nicht wenigstens 10 Minuten seit der letzten Synchronisation vergangen sind, so wird zu Programmpunkt 170 verzweigt. Bei Programmpunkt 170 wird überprüft, ob ein Schaltpunkt in dem Schaltprogramm der Thermoanlage 1 oder des Thermosystems 3, das heißt in dem Schaltprogramm eines Reglers 4, des weiteren Reglers 14 oder des dritten Reglers 16 vorliegt. Ist dies der Fall, so wird zu Programmpunkt 180 verzweigt. Bei Programmpunkt 180 wird abhängig von der vorgegeben Strategie ein neuer zweiter Sollwert berechnet. Anschließend wird bei Programmpunkt 180 der neue zweite Sollwert für das Schaltprogramm des dritten Reglers 16 zum Betreiben des Thermosystems 3 vorgegeben.

Ergibt die Abfrage bei Programmpunkt 170, dass nicht ein Schaltpunkt für die Thermoanlage 1 oder das Thermosystem 3, das heißt für einen der Regler 4 oder den weiteren Regler 14 oder den dritten Regler 16 vorliegt, so wird zu Programmpunkt 110 zurückverzweigt.

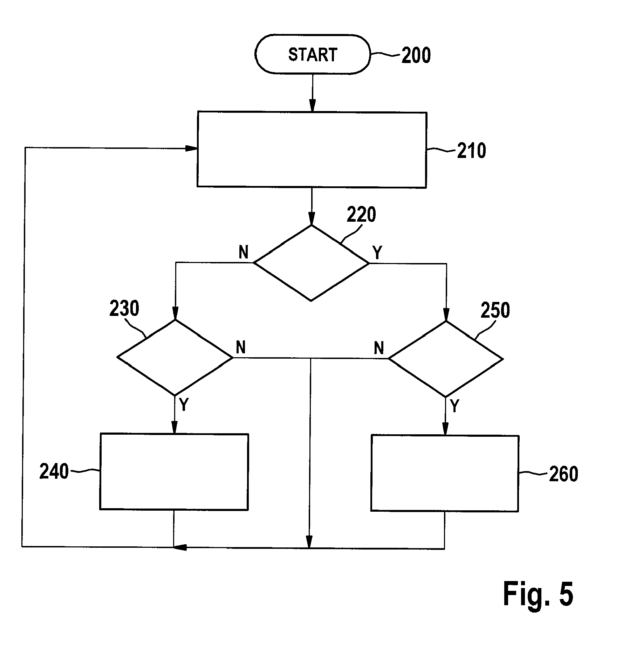

Figur 5 zeigt einen weiteren schematischen Programmablauf zur Durchführung des Verfahrens. Bei Programmpunkt 200 startet das Programm. Bei Programmpunkt 210 wird überprüft, welcher Betriebsmodus für einen der Kreise 8, 11 vorliegt und welche Solltemperatur für einen der Kreise 8, 11 vorliegt. Die Solltemperatur bzw. Solltemperaturen wird bzw. werden durch den weiteren Regler 14 oder durch die Regler 4 vorgegeben.

Bei einem folgenden Programmpunkt 220 wird überprüft, ob die Kreise 8, 11 in einem Automodus betrieben werden. Ist dies nicht der Fall, so wird bei einem folgenden Programmpunkt 230 überprüft, ob ein Benutzer einen manuellen Wert für die Solltemperatur vorgegeben hat. Ist dies nicht der Fall, so wird zu Programmpunkt 210 zurückverzweigt. Ergibt die Abfrage bei Programmpunkt 230, dass der Nutzer einen manuellen Wert eingegeben hat, so wird der manuelle Wert für den weiteren Regler 14 und den oder die Regler 4 bei Programmpunkt 240 festgelegt und anschließend zu Programmpunkt 210 zurückverzweigt.

Ergibt die Abfrage bei Programmpunkt 220, dass sich der erste oder zweite Kreis 8, 11 in einem Automodus befindet, so wird bei Programmpunkt 250 überprüft, ob ein Nutzer einen manuellen Wert für die Solltemperatur vorgegeben hat. Ist dies der Fall, so wird bei Programmpunkt 260 die temporäre Solltemperatur verwendet. Anschließend wird zu Programmpunkt 210 zurückverzweigt.

Der Regler 4, der weitere Regler 14 und/oder der dritte Regler 16 können beispielsweise in Form einer Recheneinheit ausgebildet sein. Der weitere Regler 14 stellt einen zentralen Regler für das Thermosystem 3 dar. Der dritte Regler 16 ist ausgebildet, um über entsprechende Schaltventile 15 die Kreise 8,11 unterschiedlich mit Wärme- oder Kälteleistung zu versorgen. Die Kreise 8,11 können Heizkreise und/oder Kühlkreise darstellen. Abhängig von der gewählten Ausführungsform können der Regler 4, der weitere Regler 14 und/oder der dritte Regler 16 als einfache Regel- oder Steuereinheiten ausgebildet sein. Zudem kann auf den weiteren Regler 14 auch verzichtet werden. Zudem kann eine Thermoanlage 1 mehrere dritte Regler 16 aufweisen. Insbesondere kann eine Thermoanlage 1 mehrere Anlagen wie z.B. eine Wärmepumpe, eine Solarheizung, eine Gasheizung, eine Ölheizung und eine elektrische Heizung aufweisen, wobei jede analge einen dritten Regler 16 aufweist. Sidn mehrere dritte Regler 16 vorgesehen, die jeweils eine Anlage steuern, ist eine weitere Strategie vorgesehen. Die weitere Strategie legt fest, wie anhand der Zieltemperatur oder der gemeinsamen ersten Solltemperatur für jeden der dritten Regler 16 eine neue zweite Solltemperatur berechnet wird.

## Patentansprüche

1. Verfahren zum Synchronisieren mindestens einer zweiten Solltemperatur mindestes einer Thermoanlage (1) in Abhängigkeit von mindestens einer ersten Solltemperatur mindestens eines Thermosystems (3), wobei abhängig von einer gemessenen Temperatur einer Umgebung des Thermosystems (3) und abhängig von der ersten Solltemperatur eine Heiz- oder Kühlleistung der des Thermosystems (3) in der Weise geändert wird, dass sich die Temperatur in der Umgebung des Thermosystems (3) in Richtung der ersten Solltemperatur ändert, wobei abhängig von der zweiten Solltemperatur die Thermoanlage (1) gesteuert wird, um eine Heiz- und/oder Kühlleistung für das Thermosystem (3) bereitzustellen, und wobei abhängig von der ersten und der zweiten Solltemperatur und abhängig von einer Strategie eine Zieltemperatur ermittelt wird, und wobei die Zieltemperatur als neue zweite Solltemperatur für die Thermoanlage (1) verwendet wird.

2. Verfahren nach Anspruch 1, wobei die Thermoanlage (1) mindestes einen dritten Regler (16) aufweist, wobei das Thermosystem mindestens einen Regler (4) und eine Wärme-/Kältequelle (5) aufweist, wobei der Regler (4) vorgesehen ist, um abhängig von der gemessenen Temperatur und der ersten Solltemperatur eine Heiz- oder Kühlleistung der Wärme-/Kältequelle (5) in der Weise zu ändern, dass sich die Temperatur in Richtung der ersten Solltemperatur ändert, wobei der dritte Regler (16) vorgesehen ist, um abhängig von der zweiten Solltemperatur die Thermoanlage (1) zu steuern, um eine Heiz- und/oder Kühlleistung für das Thermosystem (3) bereitzustellen, und wobei die neue zweite Solltemperatur von dem dritten Regler (16) zur Steuerung der Heiz- und/oder Kühlleistung der Thermoanlage verwendet wird.

3. Verfahren nach einem der vorhergehenden Ansprüche, wobei in festgelegten Zeitabständen die Zieltemperatur ermittelt wird und als neue zweite Solltemperatur verwendet wird, wobei die Zeitabstände von mindestens einem Regler (4) des Thermosystem (3) und/oder von dem mindestens einem dritten Regler (16) der Thermoanlage (1) vorgegeben werden.

4. Verfahren nach Anspruch 2, wobei die Zieltemperatur ermittelt wird und als neue zweite Solltemperatur von dem dritten Regler (16) verwendet wird, wenn wenigstens der Regler (4) oder der dritte Regler (16) seine Solltemperatur ändert.

5. Verfahren nach einem der vorhergehenden Ansprüche, wobei die Strategie darin besteht, die höchste der ersten und der zweiten Solltemperatur als Zieltemperatur zu verwenden.

6. Verfahren nach einem der Ansprüche 1 bis 4, wobei die Strategie darin besteht, die niedrigste der ersten und der zweiten Solltemperatur als Zieltemperatur zu verwenden.

7. Verfahren nach einem der Ansprüche 1 bis 4, wobei die Strategie darin besteht, aus der ersten und der zweiten Solltemperatur eine Zieltemperatur zu berechnen, wobei insbesondere ein Mittelwert zwischen der ersten und der zweiten Solltemperatur als Zieltemperatur berechnet wird.

8. Verfahren nach einem der vorhergehenden Ansprüche, wobei die Thermoanlage (1) in einem Automodus und in einem manuellen Modus betrieben werden kann, und wobei die zweite Solltemperatur der Thermoanlage (1) nur im Automodus synchronisiert wird.

9. Verfahren nach einem der vorhergehenden Ansprüche 2 bis 8, wobei der Regler (4) des Thermosystem (3) und/oder der dritte Regler (16) der Thermoanlage (1) festgelegte Schaltzeiten verwendet, um eine neue vorgegebene Solltemperatur zu verwenden, und wobei zu den festgelegten Schaltzeiten die Zieltemperatur ermittelt wird..

10. Verfahren nach einem der vorhergehenden Ansprüche 2 bis 9, wobei in festgelegten Zeitabständen eine interne Zeit des Reglers (4) und des dritten Reglers (16) synchronisiert wird.

11. Verfahren nach einem der vorhergehenden Ansprüche 2 bis 10, wobei die erste Solltemperatur des Thermosystems (3) durch einen Nutzer verändert werden kann, und wobei die Änderung der ersten Solltemperatur erst ab einer folgenden Schaltzeit des Reglers (4) oder des dritten Reglers (16) für eine Synchronisation der ersten und zweiten Solltemperatur verwendet wird.

12. Verfahren nach einem der vorhergehenden Ansprüche 2 bis 11, wobei das Thermosystem (3) mehrere Regler (4) mit Wärme-/Kältequellen (5) aufweist, wobei jeder Regler (4) eine eigene erste Solltemperatur verwendet, wobei aus den ersten Solltemperaturen der Regler (4) abhängig von einer zweiten Strategie eine gemeinsame erste Solltemperatur ermittelt wird, und wobei abhängig von der gemeinsamen ersten Solltemperatur und der zweiten Solltemperatur und abhängig von der Strategie eine Zieltemperatur ermittelt wird, und wobei die Zieltemperatur von dem dritten Regler (16) der Thermoanlage (1) als neue zweite Solltemperatur verwendet wird.

13. Verfahren nach Anspruch 12, wobei die gemeinsame erste Solltemperatur in einem Regler (4) oder in einem zentralen Regler (14) oder in dem dritten Regler (16) ermittelt wird, und wobei die Zieltemperatur abhängig von der gemeinsamen ersten Solltemperatur und der zweiten Solltemperatur in einem Regler (4) oder in einem zentralen Regler (14) oder in dem dritten Regler (16) ermittelt wird.

14. Verfahren nach einem der vorhergehenden Ansprüche, wobei die Wärme-/Kältequelle (5) als Wärmetauscher oder als Auslass einer Klimaanlage oder als Auslass einer Lüftungsanlage ausgebildet ist.

15. Verfahren nach einem der vorhergehenden Ansprüche, wobei die Thermoanlage (1) als Heizanlage oder als Heiz- und Kühlanlage oder als Klimaanlage oder als Lüftungsanlage ausgebildet ist.

16. Regler (4,14,16), der ausgebildet ist, um abhängig von einer ersten Solltemperatur eines Thermosystems (3) und abhängig von einer zweiten Solltemperatur einer Thermoanlage (1) und abhängig von einer Strategie eine Zieltemperatur zu ermitteln.

17. Regler nach Anspruch 16, wobei der Regler (4, 14) ausgebildet ist, um die Zieltemperatur einem Regler (16) der Thermoanlage (1) als neue zweite Solltemperatur vorzugeben.

18. Regler nach Anspruch 16, wobei der Regler (16) ausgebildet ist, um die Thermoanlage (1) zu steuern, und wobei der Regler (16) ausgebildet ist, um die Zieltemperatur als neue zweite Solltemperatur zu verwenden.
